# EUROPEAN PATENT APPLICATION

(11) **EP 0 753 781 A2**
(43) Date of publication of application: **15.01.1997**
(21) Application number: 96202830.4
(22) Date of filing: 04.10.1989
(51) Int. Cl.: G02C 13/00

(54) **Lens meter**

(30) Priority: 05.10.1988 JP 251436/88; 24.01.1989 JP 14356/89
(62) Divisional of application: 89402742.4
(71) Applicant: Kabushiki Kaisha TOPCON, Tokyo (JP)
(72) Inventor: Ishihara, Taketoshi, c/o K.K. Topcon, Itabashi-ku, Tokyo (JP)
(74) Representative: Dubois-Chabert, Guy

(57) **Abstract**

A lens meter (1) for measuring optical characteristics of a lens (L) to be processed which is disposed on a lens platform (13) includes a suction plate mounting lever (16) for mounting a suction plate (18) on the lens (L).

## Description

### BACKGROUND OF THE INVENTION

### 1. Field of the Invention

The present invention relates to a lens meter capable of mounting a processing jig an a lens to be machined or processed.

### 2. Description of the prior Art

In general, when spectacles are made, refractivity, astigmatism axis, etc. of the client's eye are measured first and then prescription data is prepared based on this measurement. In the meantime, the client is given a chance to select client's favorite lens frame, the kind of lenses, etc. and such obtained Information is sent to a machine or processing factory or the like. In the processing factory, a lens to be processed is selected based on the above-mentioned information and the orientation of the astigmatism axis of such a selected lens, optical center (optical axis), etc. are measured by a lens meter. At the same time, a marking is applied to the lens based on the above-mentioned measurement so that, when the processed lens is put into the lens frame, the astigmatism axis can be oriented in a predetermined direction.

Next, the marked lens is detached from the lens meter and is set on an absorbing device. A suction plate as a procession jig is then mounted on the center of the lens so as to be coincident with an optical axis of the lens. Thereafter, the suction plate is mounted on a lens holding shaft of & lens grinder so that the lens can be ground.

As mentioned above, since the suction plate is mounted on the marked lens by means of the absorbing device after the marking is completed, there is a problem in that the mounting work is troublesome and, in addition, the absorbing device as an individual is needed besides the lens meter.

### SUMMARY OF THE INVENTION

It is therefore an object of the present invention to provide a lens meter in which a suction plate serving as a processing jig can be easily mounted and an absorbing device is not required.

The present invention is characterized in that a lens meter for measuring optical characteristics of a lens to be machined or processed includes means for mounting a processing jig onto the lens.

### BRIEF DESCRIPTION OF THE DRAWINGS

Fig. 1 is a perspective view showing a first embodiment of a lens meter according to the present invention.

Fig. 2 is a circuit diagram showing a connecting relation between a control circuit in the lens meter of Fig. 1 and other equipment.

Fig. 3 is an explanatory view showing a relation between the lens meter of Fig. 1 and other equipment.

Fig. 4 is an explanatory view of a frame PD of a spectacle frame.

Fig. 5 is an explanatory view of a pupil PD of a person wearing spectacles.

Fig. 6 is an explanatory view showing a relation between a lens frame, an eye point, and an astigmatism axis.

Fig. 7 is an explanatory view showing a relation between the optical center of a lens to be processed and a cylindrical axis.

Fig. 8 is an explanatory view showing a relation between the lens and the lens frame of the spectacle frame.

Fig. 9 is a perspective view of an adapter for a lens platform which is used in the present invention.

Fig 10 is a sectional view taken along line VIII-VIII of Fig. 9.

Fig. 11 is a perspective view showing a second embodiment of a lens meter according to the present invention.

Fig. 12 is an optical path of the lens meter of Fig. 11.

Fig. 13 is an explanatory view showing a projecting image.

Fig. 14 is an explanatory view showing the lens frame, etc. displayed.

Fig. 15 is an explanatory view showing the orientation of the astigmatism displayed.

Fig. 16 is an explanatory view showing the lens (double focus lens).

### DESCRIPTION OF THE PREFERRED EMBODIMENTS

The present invention will be described hereunder with reference to the attached drawings.

### [First Embodiment]

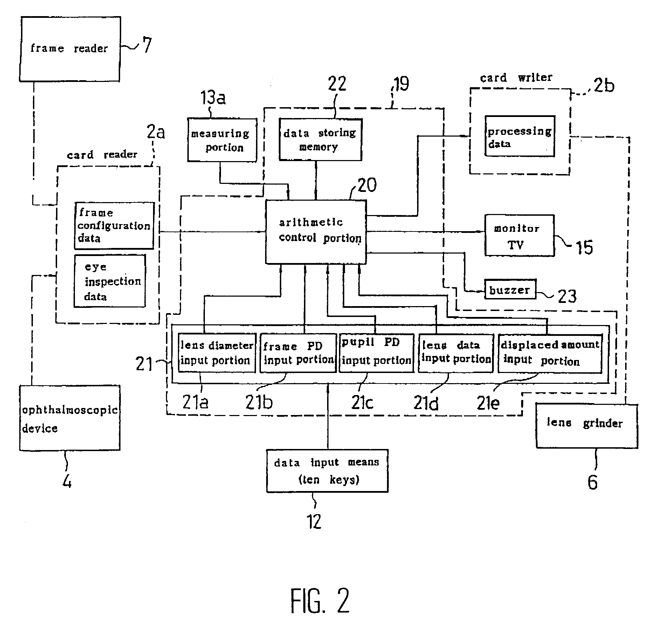

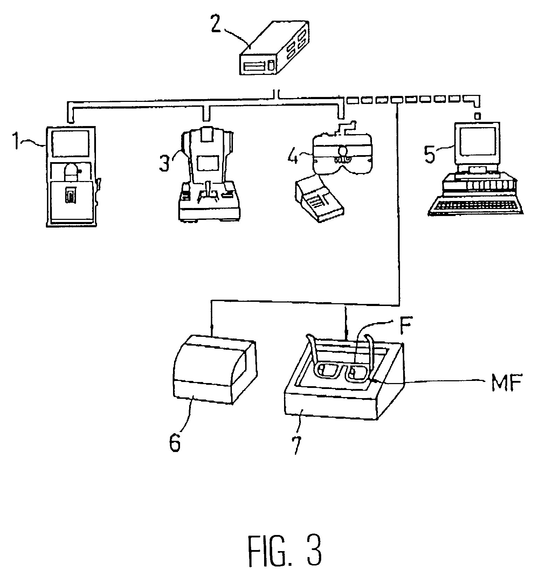

In Figs, 1 and 3, the numeral 1 denotes a lens meter of the present invention. Similarly, in Fig. 3, the numeral 2 denotes an IC card data record reproducing apparatus comprising an IC card reader 2a and an IC read writer 2b of Fig. 2, the numeral 3 denotes an objective ophthalmoscopic device, the numeral 4 denotes a subjective ophthalmoscopic device, the numeral 5 denotes a computer for controlling clients, the numeral 6 denotes a lens grinder for processing the configuration of a lens L to be processed, and the numeral 7 denotes a frame reader for measuring the configuration of a lens frame of the spectacle frame, the distance between the lens frames, the frame PD, etc. The lens meter 1, the data record reproducing apparatus 2, the objective ophthalmoscopic device 3, the subjective ophthalmoscopic device 4, the clients controlling computer 5, the lens grinder 6, etc. are designed such that they can transmit information with one another.

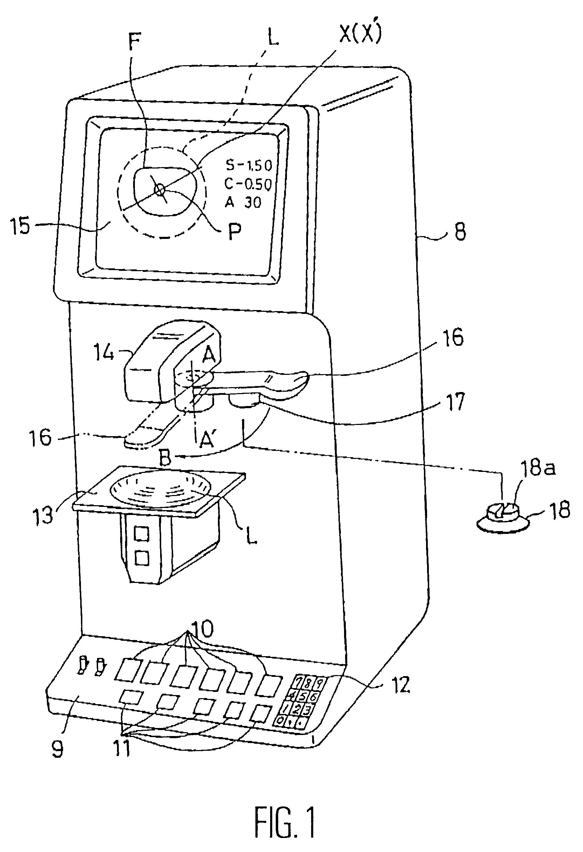

A body 8 of the lens meter of Fig. 3 is provided on a lower portion of its front surface with a key board 9 as shown in Fig. 1. The key board 9 includes a plurality of operation switches 10 which are used when the optical characteristics of the lens are measured, a plurality of switches 11 for setting data input modes, and ten keys 12 for inputting numeric values as data. Also, the body 8 is provided with a lens platform 13 containing a sensor used as a measuring portion 13a (measuring means) of Fig. 2 for measuring the lens configuration, on the center of the front surface of the body 8.

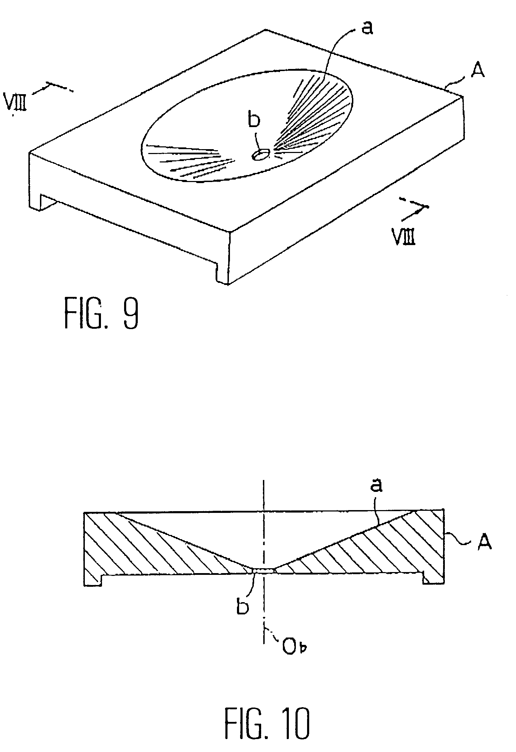

A lens platform adapter A as shown in Figs. 9 and 10 can be mounted on the lens platform 13. The adapter A has a bowl-shaped recess portion a formed in its center, and the recess portion a has a tiny hole b formed in its center. When the adapter A is mounted on the lens platform 13 for use, the center of the recess portion a, namely, the center Ob of the tiny hole b is brought to be coincident with a measuring optical axis of the measuring portion 13a. In this state, the lens L is mounted in the recess portion a and by measuring the optical characteristics in the center of the external configuration of the processing lens L, the optical center can be calculated by arithmetic means which will be hereunder described with reference to a prism quantity. In accordance with this, it can also cope with the lens the optical center of which is displaced from the center of its external configuration.

Also, above the lens platform 13, a mounting projection portion 14 integral with the body 8 is disposed. Within the mounting projection portion 14, a guiding optical path (not shown) is formed for guiding a measuring beam of light emitted in the body 8 toward the lens L disposed on the lens platform 13 along the measuring optical axis.

The mounting projection portion 14 is provided with a lens presser and marking means (not shown). A monitor TV 15 (display means) is disposed on an upper portion of the body 8.

The mounting projection portion 14 is provided, on its lower portion, with a suction plate mounting lever 16 as a jig mounting means in such a manner as to be horizontally pivotable about the axial line A-A' and drivable in the vertical direction. Although the pivoting operation and the vertical driving operation of the suction plate mounting lever 16 are carried out by band in this embodiment, they may be carried out automatically. The suction plate mounting lever 16 is provided, on its intermediate portion, with a suction plate holder 17, and a mounting shaft portion 18a of a rubber suction plate 18 as a processing jig is removably held by the suction plate holder 17.

The suction plate mounting lever 16, which is deviated from the optical path in a waiting state as shown in Fig. 1, is pivoted about the axis A-A' so as to enter the measuring optical path and is pushed downward, so that the suction plate 18 contacts and sucks the lens L.

The body 8 includes a control circuit 19 as shown in Fig. 2. The control circuit 19 includes an arithmetic control portion 20, a data input portion 21, and a data storing memory 22.

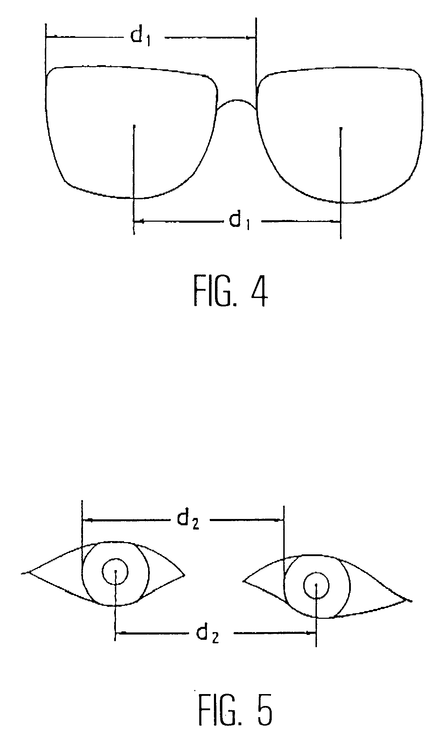

The data input portion 21 comprises a lens diameter input portion 21a (means for inputting information about the outer periphery of the lens L), a frame PD input portion 21b, a pupil PD input portion 21c, a lens data input portion 21d (lens data input means), a displaced-amount input portion 21e, etc. Moreover, the data input portion 21 is selected by a mode setting switch 11 of Fig. 1 and thereafter inputs the lens diameter, the frame PD, the pupil PD, the lens data, the displaced amount (i.e., the amount of movement for exhibiting a prism function), etc. into the arithmetic control portion 20 (arithmetic means). The frame PD input portion 21b and the pupil PD input portion 21C make up the eye point input means. Also, as shown in Fig. 4, the frame PD is adapted to show the distance between the centers of the two lens frames (framework) F of the spectacle frames MF, that is, the distance d1 between the geometric centers, whereas the pupil PD, is shown in Fig. 5, is adapted to show the distance between the centers of the pupils in both eyes of the person wearing the spectacles.

In this embodiment, the lens diameter input portion 21a inputs the diameter of the lens L through the tan keys 12 on the keyboard 9. However, if it is designed such that, when the lens L is mounted on the lens platform 13, the lens L is automatically measured by the measuring portion 13a, data about a modified lens other than a circular lens can also be input,

Also, the pupil PD input portion 21c and the lens data input portion 21d are designed such that data is directly input therein from the objective ophthalmoscopic device 3 and the subjective ophthalmoscopic device 4 through on-line, IC card or the like. However, when data is not directly input into the pupil input portion 21c and the lens data input portion 21d from the objective ophthalmoscopic device 3 and the subjective ophthalmoscopic device 4, necessary data is input by operating the mode setting switch 11 and the ten keys 12 on the keyboard 9 while looking at the prescription, etc. obtained as the result of the measurement by the use of the objective ophthalmoscopic device 3 and the subjective ophthalmoscopic device 4.

Frame configuration data and lens data are input into the arithmetic control portion 20 from the IC card reader 2a of the IC card data record reproducing apparatus 2. Also, a measuring signal is input into the arithmetic control portion 20 from the measuring portion (sensor) 13a disposed on the lens platform 13. The data about the configuration (frame configuration) of the lens frame of the spectacle frame, the distance between the two lens frames or the frame PD (distance between the centers of the lens frames), etc. measured by the frame reader 7, and the data about the most suitable trial lens, etc. used at the eye testing by the use of the objective ophthalmoscopic device 3 and the subjective ophthalmoscopic device 4 are input into the IC card reader 2a as means for inputting information about the frame configuration of the spectacle frame. If the frame PD can be measured by the frame reader 7, the frame PD is input into the arithmetic control portion 20 through the IC card reader 2a but, if the frame PD cannot be measured by the frame reader 7, the frame PD is input from the frame PD input portion 21b by the ten keys 9.

In this embodiment, the lens data which is input into the arithmetic control portion 20 by the card reader 2a or the on-line includes the refractive power, the cylindrical power, the axial angle, the displaced amount, the pupil PD (distance between the pupils), etc. of a lens prescribed by the eye Inspection.

On the other hand, from the arithmetic control portion 20, the processed data including the data about the configuration of the framework is input into the IC read writer 2b, and the data about the lens L, the configuration of the lens L, the lens frame, etc. are input into the monitor TV 15 so that they are displayed thereon. The IC read writer 2b inputs data necessary for the grind processing control with respect to the peripheral edge portion of the lens L. Also, the arithmetic control portion 20 drives and controls a buzzer 23.

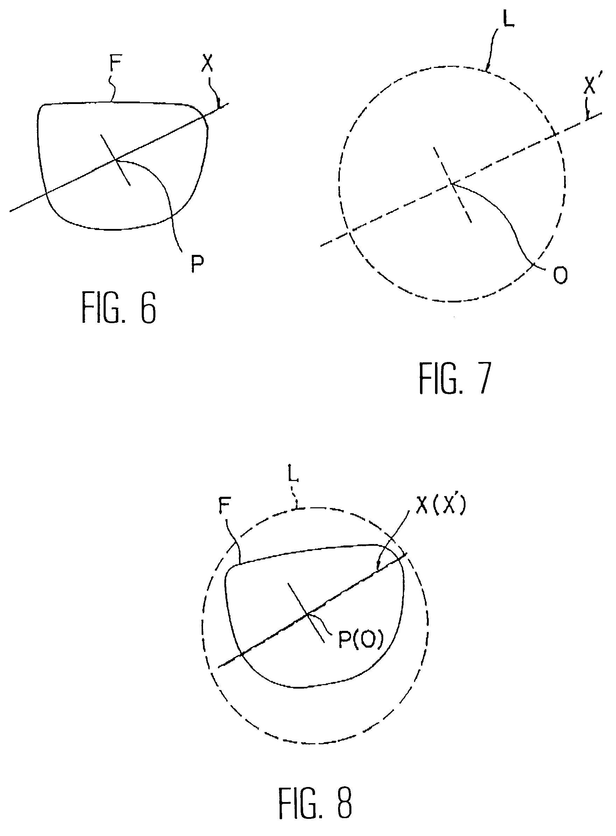

The arithmetic control portion 20 calculates the position of the eye point P (see Fig. 6) in the framework F from the frame PD and pupil PD. The eye point P and the optical center 0 of the lens L are brought to be coincident with each other, and the arithmetic control portion 20 calculates to judge whether a shortage of the basis material occurs with respect to the spectacle frame MF (Fig. 3) selected. At this time, the framework F and the lens L are superimposed on each other and are displayed on the monitor TV 16 so that the shortage of the basis material of the lens can be visually observed. Also, the eye point P of the prescription shown in Fig. 6 and the optical center O at the lens L shown in Fig. 7 are brought to be coincident with each other as shown in Fig. 8 and, at the same time, the astigmatism axis X of the prescription shown in Fig. 6 and the cylindrical axis X' of the lens L shown in Fig. 7 are brought to be coincident with each other as shown in Fig. 8 and displayed in that state.

If the shortage of the basis material has occurred as a result of the calculation, a message indicating the shortage thereof is displayed on the screen of the TV monitor 15 and an alarm is also given by the buzzer 23.

Next, as the result of the calculation, it the shortage of the basis material of the lens L does not occur, the lens L is mounted on the lens platform 13, and the optical characteristics of the optical center of the lens L are measured. Thereafter, a measured value is compared with the spherical power and cylindrical power of the lens data which have been already input. If the measured value differs from the input data, a message indicating the disagreement therebetween is displayed on the screen of the monitor TV 15 and an alarm is also given by the buzzer 23. It may be designed such that the lens data is not input into the lens meter and is compared with the measurement result in order to make a "YES" or "NO" judgment for processing the lens.

Furthermore, the frame work F, the eye point P, the astigmatism axis X of the prescription, the optical center O of the lens L, and the cylindrical axis X' which are fixedly displayed on the screen of the monitor TV 15 on the lens platform 13 are brought to be coincident with one another if the optical characteristics of the lens L are also in accord with the prescription. In this case, the lens L is adjusted such that a coincidence between the astigmatism axis X and the cylindrical axis X' occurs and a coincidence between the eye point P and the optical center O occurs.

By rotating the suction plate mounting lever 16 by 90° after the suction plate 18 is held by the suction plate holder 17 of the suction plate mounting lever 16, the center of the suction plate 18 is brought to be coincident with the optical center O of the lens L. Next, the suction plate mounting lever 16 is pushed dawn so that the suction plate 18 of the suction plate mounting lever 16 is attracted by the lens L on the lens platform 13. When the suction plate 18 is attracted by the lens L, the center of the suction plate 18 and the optical center O of the lens L are brought to be coincident with each other.

As mentioned above, the framework F, eye point P, astigmatism axis X, optical center O of the lens L, and cylindrical axis X' are caused to coincide with each other and, at the same time, the center of the suction plate 18 and the optical center O of the lens L are caused to coincide with each other, After that, the suction plate mounting lever 16 is pushed down, so that the suction plate 18 can contact and suck the lens L. Therefore, the conventional absorbing device is not needed, Additionally, since there is no need to set the lens L on the absorbing device, the suction plate is easy mounted.

If the suction plate 18 is set on the grinder 6 after the suction plate 18 sucks the lens L, the grinder 6 can grind the lens L so that the astigmatism axis can be oriented in a predetermined direction when the processed lens L is fitted in the lens frame,

In this embodiment, when the suction plate 18 contacts and sucks the lens L, the eye point P and the optical center O are caused to coincide with each other. Instead, a coincidence may be brought about only between the astigmatism axis X and cylindrical axis X'. If so, data (prism amount) about the optical characteristics of a position where the lens L is sucked by the suction plate 18 is stored in a memorizing means and is input in the grinder 6. Thereafter, based on the data, the grinder 6 calculates the amount of displacement between the eye point P and the optical center O, and the lens L is moved by the displacement amount obtained by the calculation and is ground. Therefore, there is no need to adjust the coincidence between the eye paint P and the optical center O.

### [Second Embodiment]

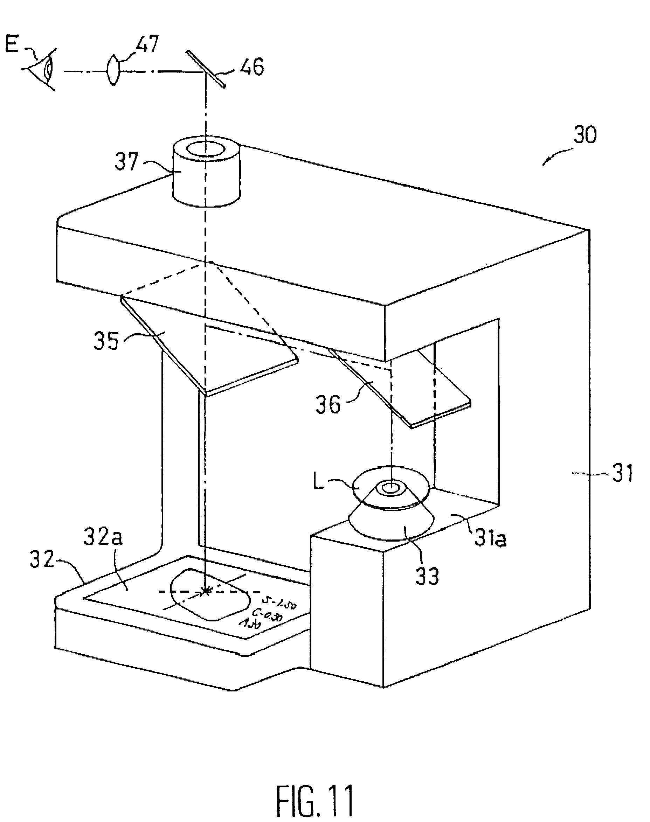

A second embodiment is shown in Figs. 11 through 16.

This lens meter 30 is to determine whether the selected lens L becomes short in basis material with respect to the spectacle frame (Fig. 3) by optically overlapping an image of the lens L and a displayed image of the lens frame F.

Moreover, in this embodiment, the lens diameter input portion 21a shown in Fig. 2 is omitted and, instead, a control circuit is employed in the place of the arithmetic control portion 20' of the arithmetic control portion 20.

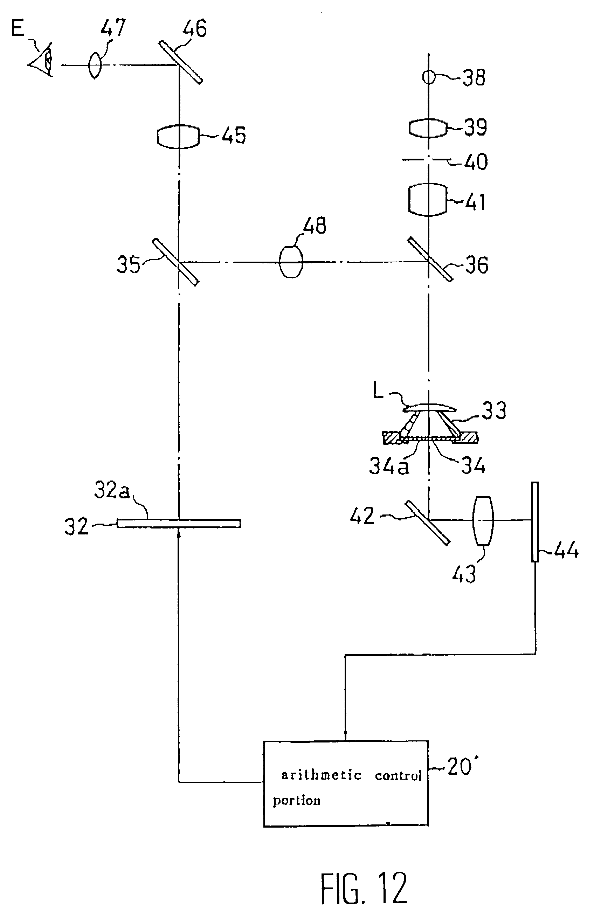

A body 31 of the lens meter 30 shown in Fig. 11 has a substantially reversed-C-shaped side configuration. A display portion 32, such as an LCD (liquid crystal displayer), is disposed on its bottom portion, and a circular truncated cone shaped lens mounting table 33 is disposed on its right-hand side wall 31a which is formed higher by one step. The lens mounting table 33 contains a ring mask 34 (see Fig. 12) having a ring-shaped light transmitting portion 32a, and half mirrors 35 and 36 are disposed on upper parts of the display portion 32 and the lens mounting table 33, respectively. An opening communicating with a cylinder 37 disposed on the outer surface is formed in an upper part of the body 31 which is disposed above the display portion 32.

As shown in Fig. 12, the lens meter 30 includes a measuring optical system and first and second observation optical systems forming the first and second observation optical paths.

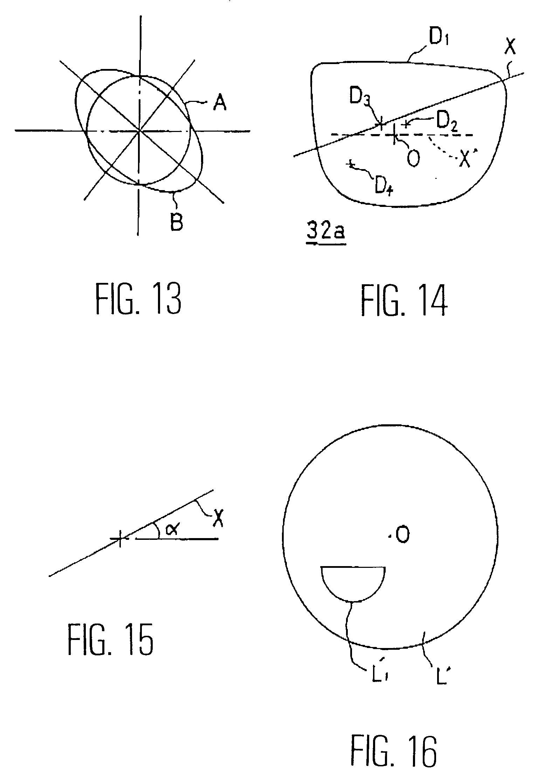

The measuring optical system includes optical members, such as a light source 38, a condenser lens 39, a diaphragm mask 40, a collimator lens 41, the half mirror 36, the ring mask 34, a reflecting mirror 42, a focus lens 43, and a CCD 44. Illumination light from the light source 38 passes through the condenser lens 39, the diaphragm mask 40, the collimator lens 41, the half mirror 36, the ring mask 34, the reflecting mirror 42, and the focus lens 43 and projects an image of the lens L mounted an the lens mounting table 33 onto the CCD 44. The projected image, as shown in Fig. 13, becomes a ring-shaped image A if there is no cylindrical refraction and, if there is the cylindrical refraction, it becomes a distorted elliptical image B. From the projected image, the optical characteristics of the lens L are measured in the arithmetic control portion 20'. This measurement result is displayed on the displaying surface 32a of the display portion 32 as shown in Fig. 11.

The first observation optical system includes optical members of the display portion, the display portion 32, the half mirror 35, a lens 45, a reflecting mirror 46, an ocular 47, etc. The display portion 32a is projected to an observing eye E through the first observation optical system comprising the half mirror 35, the lens 45, the reflecting mirror 46, the ocular 47, etc.

The second observation optical system includes optical members of the half mirror 36, a lens 48, the half mirror 35, the lens 45, the ocular 47, etc. An image of the lens L mounted on the mounting table 33 containing the ring mask 34 is projected to the observing eye E through the second observation optical path comprising the half mirror 36, the lens 48, the half mirror 35, the lens 45, the reflecting mirror 46, the ocular 47, etc. The lens 48 is adapted to wake the power of the lens L coincident with the display power of the display portion 32.

In this way, the lens 45, reflecting mirror 46 and ocular 47 which are commonly used in the first and second observation optical paths make up a common optical path for simultaneously discerning the displaying surface 32a of the display portion 32 and the lens L superimposed upon each other.

Also, as shown in Fig. 14, the arithmetic control portion 20' calculates the data about the prescription in order to display the frame configuration D1, the frame center D2, the pupil center D3, the astigmatism axis X, etc. on the displaying surface 32a. At this time, as shown in Fig. 15, the astigmatism axis X having a predetermined angle α is displayed.

By bringing the cylindrical axis X' direction to be coincident with the astigmatism axis X direction and the optical center O to be coincident with the pupil center D3, respectively, by, for example, manually adjusting the lens L while looking at the displaying surface 32a, there can be confirmed whether the lens L on the displaying surface 32a will become short in basis material.

Also, when the surface of a lens, such as a multi focus lens (double focus lens of Fig. 16), must be taken into consideration, the lens surface is observed in order to confirm whether the near-use portion L1' is correctly included in the frame configuration D1. Also, by inputting a near-use pupil PD beforehand, the near-use pupil center D4 may be displayed.

It may be designed such that the astigmatism axis X, the frame configuration D1, the frame center D2, the pupil center D3, etc. displayed on the displaying surface 32a by the arithmetic control portion 20' are displayed in a position where the pupil center D3 and the measuring optical axis of the measuring optical system are coincident with each other, or in a position slightly displaced by a predetermined amount according to necessity, and the cylindrical axis X' of the lens L and the optical axis are brought to be coincident with the pupil center D3. With this construction, by providing the jig mounting leans as shown in Fig. 1, the attraction of the suction plate can be carried out without moving the lens L after the confirmation, and the suction plate can be easily mounted as in the first embodiment.

In this embodiment, when there is a difference between the refractive power of the data about the prescription input beforehand and the refractive power of the lens L measured, this difference 19 detected by warning means and, additionally, a message indicating the difference is displayed on the displaying surface 32a. Further, a warning is issued by, for example, the buzzer 23 of the first embodiment.

## Claims

1. A lens meter (1) that measures optical characteristics of a lens (L) to be processed, characterized in that:
said lens meter (1) includes mounting means (16) for mounting a processing jig (18) on said lens (L) to be processed.

2. A lens meter (1) according to claim 1, characterized in that:
said lens meter (1) further includes memorizing means (22) for memorizing optical characteristics of a position where said processing jig (18) is mounted.

3. A lens meter (1) according to claim 1, characterized in that:
said processing jig (18) is a suction plate, and said mounting means (16) is a suction plate mounting lever that mounts maid suction plate (18) on said lens (L).

4. A lens meter (1) according to claim 3, characterized in that:
said suction plate mounting lever (16) waits at a position deviating from a measuring optical path that is used to measure the optical characteristics of said lens (L) and, when said suction plate (18) sucks said lens (L), said suction plate mounting lever (16) enters the measuring optical path and causes said suction plate (18) to contact and suck said lens (L).
